# EUROPÄISCHE PATENTANMELDUNG

(11) **EP 3 082 102 A1**
(43) Veröffentlichungstag der Anmeldung: **19.10.2016**
(21) Anmeldenummer: 15163367.4
(22) Anmeldetag: 13.04.2015
(51) Int. Cl.: G06T 7/00

(54) **VERFAHREN ZUM EVALUIEREN WENIGSTENS EINER MITTELS EINES GENERATIVEN PULVERSCHICHTVERFAHRENS HERGESTELLTEN BAUTEILSCHICHT**

(71) Anmelder: MTU Aero Engines AG, 80995 München (DE)
(72) Erfinder: Ladewig, Alexander, 83707 Bad Wiessee (DE)

(57) **Zusammenfassung**

Die Erfindung betrifft ein Verfahren zum Evaluieren wenigstens einer mittels eines generativen Pulverschicht-verfahrens hergestellten Bauteilschicht, bei welchem zumindest die Schritte Erfassen einer Abbildung der wenigstens einen Bauteilschicht mittels einer Sensoreinrichtung, Unterteilen der Abbildung in eine Mehrzahl von Bildsegmenten mittels einer Recheneinrichtung, Ermitteln eines Homogenitätswerts für jedes Bildsegment mittels der Recheneinrichtung und Evaluieren der Bauteilschicht anhand der ermittelten Homogenitätswerte mittels der Recheneinrichtung durchgeführt werden. Die Erfindung betrifft weiterhin eine Vorrichtung zur Durchführung eines derartigen Verfahrens.

## Beschreibung

Generative Pulverschichtverfahren bezeichnen Prozesse, bei denen anhand von digitalen 3D-Konstruktionsdaten pulverförmiges Material schichtweise abgelagert wird, um ein Bauteil aufzubauen. Damit unterscheiden sich generative Pulverschichtverfahren von konventionellen abtragenden oder urformenden Fertigungsmethoden. Anstatt zum Beispiel ein Werkstück aus einem festen Block herauszufräsen, bauen solche additive Herstellungsverfahren Bauteile Schicht für Schicht aus einem oder mehreren Werkstoffen auf. Beispiele für generative Pulverschichtverfahren sind Lasersinter- oder Laserschmelzverfahren, die beispielsweise zur Herstellung von Bauteilen für Flugtriebwerke verwendet werden. Ein solches Verfahren ist bereits aus der DE 10 2004 017 769 B4 bekannt. Beim selektiven Laserschmelzen (selective laser melting, SLM-Verfahren) werden dünne Pulverschichten des oder der verwendeten Werkstoffe auf eine Bauplattform aufgebracht und mit Hilfe eines oder mehrerer Laserstrahlen lokal aufgeschmolzen, wodurch eine Bauteilschicht gebildet wird. Anschließend wird die Bauplattform abgesenkt, eine weitere Pulverschicht aufgebracht und erneut lokal zu einer folgenden Bauteilschicht verfestigt. Dieser Zyklus wird solange wiederholt, bis das fertige Bauteil erhalten wird. Das fertige Bauteil kann anschließend bei Bedarf weiterbearbeitet oder sofort verwendet werden. Beim selektiven Lasersintern wird das Bauteil in ähnlicher Weise durch laserunterstütztes Sintern von pulverförmigen Werkstoffen hergestellt.

Beim SLM-Verfahren können beim Auftreffen des Laserstrahls auf das Pulverbett Pulverpartikel und/oder ein Teil des aufgeschmolzenen Werkstoffs in unerwünschter Weise aus dem Arbeitsbereich herausgeschleudert werden. Dieser sogenannte Schmelzbadauswurf kann wieder auf dem zu bearbeitenden Pulverbett landen. Beim Aufschmelzen einer Pulverstelle mit einem solchen (erhöhten) Auswurf kommt es vor, dass das eigentlich aufgeschüttete Pulver zu wenig Energie erhält und das Pulver dementsprechend nicht oder nicht vollständig aufgeschmolzen wird. Wie stark sich diese Schmelzbadauswürfe auswirken, hängt auch von den jeweiligen Prozessparametern, beispielsweise der belichteten Bauteilfläche, dem Material, der Schichtstärke usw. ab. Unter ungünstigen Umständen kann es dazu kommen, dass die Menge an Auswürfen zunimmt und sich die Auswürfe auf den noch zu bearbeitenden Oberflächenbereichen ablegen. Dies führt in der folgenden Laserbelichtung zu einem unvorhergesehenen und unzulässigen Anstieg der Pulvermenge, was wiederum in Anbindungsfehlern und einer Beeinträchtigung der Bauteileigenschaften resultiert. Die durch das Aufschmelzen emittierte Strahlung wird in dem Moment, in dem eine Pulveranhäufung überschweißt wird, abgeschwächt (gedämpft). Die Rückstrahlung der Pulver- bzw. Bauteilschicht kann zum Beispiel durch eine Kamera als Abbildung erfasst und mit Hilfe einer Recheneinrichtung evaluiert werden, wobei normalerweise für jede Bauteilschicht eine Abbildung aufgenommen und zur Evaluierung mit mathematischen Methoden gemittelt wird.

Als nachteilig hat sich dabei jedoch herausgestellt, dass die bezogen auf die Fläche der Bauteilschicht normalerweise kleinen Auswürfe und daraus resultierende Fehlerstellen in der Bauteilschicht nicht oder zumindest nicht zuverlässig detektiert werden können. Daher werden eigentlich fehlerhafte Bauteilschichten teilweise irrtümlich als zulässig klassifiziert.

Aufgabe der vorliegenden Erfindung ist es, ein zuverlässigeres Verfahren zum Evaluieren wenigstens einer mittels eines generativen Pulverschichtverfahrens hergestellten Bauteilschicht zu schaffen. Eine weitere Aufgabe der Erfindung besteht darin, eine Vorrichtung zur Durchführung eines solchen Verfahrens zu schaffen.

Die Aufgaben werden erfindungsgemäß durch ein Verfahren gemäß Patentanspruch 1 sowie durch eine Vorrichtung gemäß Patentanspruch 11 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen der Vorrichtung und umgekehrt anzusehen sind.

Ein erster Aspekt der Erfindung betrifft ein Verfahren zum Evaluieren wenigstens einer mittels eines generativen Pulverschichtverfahrens hergestellten Bauteilschicht, wobei eine zuverlässigere Evaluierung erfindungsgemäß dadurch erreicht wird, dass zumindest die Schritte Erfassen einer Abbildung der wenigstens einen Bauteilschicht mittels einer Sensoreinrichtung, Unterteilen der Abbildung in eine Mehrzahl von Bildsegmenten mittels einer Recheneinrichtung, Ermitteln eines Homogenitätswerts für jedes Bildsegment mittels der Recheneinrichtung und Evaluieren der Bauteilschicht anhand der ermittelten Homogenitätswerte mittels der Recheneinrichtung durchgeführt werden. Mit anderen Worten ist es erfindungsgemäß vorgesehen, dass zunächst eine Abbildung der hergestellten Bauteilschicht mit Hilfe einer Sensoreinrichtung erfasst wird. Anschließend wird die Abbildung, die vorzugsweise in digitalisierter Form vorliegt, mittels der Recheneinrichtung in mehrere Bildsegmente unterteilt. Zum Unterteilen der Abbildung in die Bildsegmente kann beispielsweise formal ein entsprechendes Raster über die Abbildung gelegt werden. Die Anzahl, Form und Aufteilung der Bildsegmente kann dabei beispielsweise in Abhängigkeit der Fläche bzw. Geometrie des Bauteilsegments, der Auflösung der Abbildung und dergleichen gewählt werden. Anschließend wird für jedes Bildsegment ein Homogenitätswert ermittelt, wonach die Bauteilschicht anhand der für die einzelnen Bildsegmente ermittelten Homogenitätswerte evaluiert wird. Fehlerfreie bzw. nicht zu beanstandende Bauteilschichtbereiche weisen dabei grundsätzlich einen hohen Grad an Homogenität auf, während fehlerhafte Bauteilschichtbereiche wie beispielsweise Bereiche, auf denen sich vor dem Aufschmelzen Auswürfe abgelegt hatten, aufgrund ihrer ungleichmäßigen Oberflächenbeschaffenheit eine vergleichsweise geringe Homogenität aufweisen. Indem im Rahmen des erfindungsgemäßen Verfahrens nicht die Abbildung im Ganzen evaluiert, sondern zunächst in mehrere Bildsegmente aufgeteilt und einzeln einer Homogenitätsberechnung unterworfen wird, können auch vergleichsweise kleine Fehlerstellen anhand von Unterschieden und Abweichungen einzelner Homogenitätswerte detektiert und bei der Evaluierung berücksichtigt werden. Dies ermöglicht eine bessere Qualitätsbeurteilung der einzelnen Bauteilschichten, wodurch auch eine bessere Beurteilung der Gesamtqualität des fertigen Bauteils ermöglicht ist.

In einer vorteilhaften Ausgestaltung der Erfindung wird die Abbildung mittels der Sensoreinrichtung als Graustufenbild erfasst und/oder nach dem Erfassen mittels der Recheneinrichtung vorverarbeitet, insbesondere in ein Graustufenbild umgewandelt. Unter Graustufen werden im Rahmen der Erfindung Abstufungen zwischen reinem Weiß und reinem Schwarz bezeichnet. Da Graustufen Helligkeitswerte repräsentieren, ist hierdurch eine besonders einfache und schnelle Auswertung der einzelnen Bildsegmente und eine entsprechend einfache und schnelle Ermittlung der Homogenitätswerte für jedes Bildsegment ermöglicht. Grauwerte können beispielsweise als 8-Bit Wert zwischen 0 und 255 oder in Hexadezimalschreibweise als Wert zwischen #00 und #FF in einem Speicher der Recheneinrichtung hinterlegt werden. Entsprechend können Bilder, die als 16-Bit Graustufenbild vorliegen, Grauwerte zwischen 0 und 65535 enthalten. Grundsätzlich können auch gröbere oder feinere Abstufungen des Grauwerts vorgesehen sein. Demgegenüber führen Farbbilder, die grundsätzlich natürlich auch als Abbildung verwendbar sind, zu mehrdimensionalen und aufwändiger auszuwertenden Werteverteilungen. Alternativ oder zusätzlich kann die Abbildung mit Hilfe der Recheneinrichtung anderweitig vorverarbeitet werden. Dies ist insbesondere bei gestörten Abbildungen sinnvoll. Mögliche Ursachen für Störungen sind beispielsweise inhomogene Beleuchtung, Verunreinigungen oder Störungen in der Sensoreinrichtung, Probleme in der Sensoroptik (Randabfall, Verzerrungen etc.), Nichtlinearitäten der Sensoreinrichtung, Rauschen der Erfassungs- oder Auswerteelektronik, Einkopplungen und dergleichen. Eine Vorverarbeitung der Abbildung kann beispielsweise eine Normierung von Graustufen und/oder der Bildgeometrie, die Korrektur bzw. Unterdrückung von Störungen, die Extraktion von Merkmalen für die Steuerung oder Parametrisierung von Algorithmen und/oder das Erzielen von Invarianzeigenschaften umfassen.

Weitere Vorteile ergeben sich, indem die Abbildung in gleich große und/oder quadratische Bildsegmente unterteilt wird. Dies erlaubt eine besonders einfache Verarbeitung der Abbildung und eine entsprechend schnelle und einfache Auswertung der ermittelten Homogenitätswerte. Beispielsweise kann jedes Bildsegment eine Kantenlänge aufweisen, die zwischen 1/10 und 1/100 der Kantenlänge der Abbildung, also beispielsweise 1/10, 1/11, 1/12, 1/13, 1/14, 1/15, 1/16, 1/17, 1/18, 1/19, 1/20, 1/21, 1/22, 1/23, 1/24, 1/25, 1/26, 1/27, 1/28, 1/29, 1/30, 1/31, 1/32, 1/33, 1/34, 1/35, 1/36, 1/37, 1/38, 1/39, 1/40, 1/41, 1/42, 1/43, 1/44, 1/45, 1/46, 1/47, 1/48, 1/49, 1/50, 1/51, 1/52, 1/53, 1/54, 1/55, 1/56, 1/57, 1/58, 1/59, 1/60, 1/61, 1/62, 1/63, 1/64, 1/65, 1/66, 1/67, 1/68, 1/69, 1/70, 1/71, 1/72, 1/73, 1/74, 1/75, 1/76, 1/77, 1/78, 1/79, 1/80, 1/81, 1/82, 1/83, 1/84, 1/85, 1/86, 1/87, 1/88, 1/89, 1/90, 1/91, 1/92, 1/93, 1/94, 1/95, 1/96, 1/97, 1/98, 1/99 oder 1/100 beträgt. Alternativ oder zusätzlich kann jedes Bildsegment beispielsweise eine Größe zwischen 10x10 und 100x100 Pixel, also 10x10, 11x11, 12x12, 13x13, 14x14, 15x15, 16x16, 17x17, 18x18, 19x19, 20x20, 21x21, 22x22, 23x23, 24x24, 25x25, 26x26, 27x27, 28x28, 29x29, 30x30, 31x31, 32x32, 33x33, 34x34, 35x35, 36x36, 37x37, 38x38, 39x39, 40x40, 41x41, 42x42, 43x43, 44x44, 45x45, 46x46, 47x47, 48x48, 49x49, 50x50, 51x51, 52x52, 53x53, 54x54, 55x55, 56x56, 57x57, 58x58, 59x59, 60x60, 61x61, 62x62, 63x63, 64x64, 65x65, 66x66, 67x67, 68x68, 69x69, 70x70, 71x71, 72x72, 73x73, 74x74, 75x75, 76x76, 77x77, 78x78, 79x79, 80x80, 81x81, 82x82, 83x83, 84x84, 85x85, 86x86, 87x87, 88x88, 89x89, 90x90, 91x91, 92x92, 93x93, 94x94, 95x95, 96x96, 97x97, 98x98, 99x99 oder 100x100 Pixel besitzen. Ebenso kann vorgesehen sein, dass jedes Bildsegment eine Fläche von 0,1 mm², 0,2 mm², 0,3 mm², 0,4 mm², 0,5 mm², 0,6 mm², 0,7 mm², 0,8 mm², 0,9 mm², 1,0 mm², 1,1 mm², 1,2 mm², 1,3 mm²,1,4 mm², 1,5 mm², 1,6 mm², 1,7 mm², 1,8 mm², 1,9 mm², 2,0 mm², 2,1 mm²,2,2 mm², 2,3 mm², 2,4 mm², 2,5 mm², 2,6 mm², 2,7 mm², 2,8 mm², 2,9 mm², 3,0 mm², 3,1 mm², 3,2 mm², 3,3 mm², 3,4 mm², 3,5 mm², 3,6 mm², 3,7 mm², 3,8 mm², 3,9 mm², 4,0 mm², 4,1 mm², 4,2 mm², 4,3 mm², 4,4 mm², 4,5 mm², 4,6 mm², 4,7 mm², 4,8 mm², 4,9 mm², 5,0 mm² oder mehr der Bauteilschicht abbildet.

In einer weiteren vorteilhaften Ausgestaltung der Erfindung ist vorgesehen, dass die Abbildung nur in Abbildungsbereichen in Bildsegmente unterteilt wird, die zumindest eine Teilabbildung der Bauteilschicht enthalten, und/oder dass die Abbildung derart in Bildsegmente unterteilt wird, dass jedes Bildsegment zumindest eine Teilabbildung der Bauteilschicht enthält. Mit anderen Worten ist es vorgesehen, dass nur solche Bildsegmente berücksichtigt werden, die zumindest einen Teil der Bauteilschicht abbilden. Umgekehrt werden Bildsegmente, auf denen keine Bauteilschicht abgebildet ist, bei der Evaluierung nicht berücksichtigt. Hierdurch wird sichergestellt, dass die Auswertung nicht durch Bildsegmente beeinträchtigt wird, die keinen Bezug zur zu evaluierenden Bauteilschicht besitzen und beispielsweise nur den Bauraum einer Laserschmelzanlage oder ähnliches zeigen. Darüber hinaus wird die Bearbeitungszeit verkürzt, da nur für qualitätsrelevante Bildsegmente Homogenitätswerte ermittelt und ausgewertet werden müssen. Grundsätzlich ist es dabei möglich, zunächst die gesamte Abbildung in Bildsegmente zu unterteilen und anschließend die nicht-relevanten Bildsegmente vor der weiteren Verarbeitung zu verwerfen. Ebenso kann vorgesehen sein, dass die Abbildung von Anfang an nur im Bereich der Bauteilschicht in Bildsegmente unterteilt wird. Weiterhin kann vorgesehen sein, dass die Abbildung derart in Bildsegmente aufgeteilt wird, dass jedes Bildsegment eine Teilabbildung der Bauteilschicht enthält.

In einer weiteren vorteilhaften Ausgestaltung der Erfindung ist vorgesehen, dass beim Ermitteln der Homogenitätswerte Randbereiche der Bauteilschicht berücksichtigt werden. Hierdurch können Randeffekte an Bauteilkanten bei der Evaluierung besser berücksichtigt werden.

In weiterer Ausgestaltung der Erfindung ist es vorgesehen, dass wenigstens ein Homogenitätswert anhand einer Häufigkeitsverteilung eines Bildsegments, insbesondere anhand eines Histogramms, und/oder anhand einer Co-Occurence-Matrix eines Bildsegments und/oder anhand wenigstens eines Parameters aus der Gruppe Farbmaximalwert, Farbminimalwert und Mittelwert ermittelt wird. Mit Hilfe einer Häufigkeitsverteilung kann besonders schnell und einfach ein Homogenitätswert für das betreffende Bildsegment ermittelt werden. Insbesondere mit Hilfe eines Histogramms kann die statistische Häufigkeit beispielsweise von Grauwerten im Bildsegment zur Ermittlung des Homogenitätswerts herangezogen werden. Dabei korrespondiert eine enge Häufigkeitsverteilung mit einem hohen Homogenitätswert, während eine breite Häufigkeitsverteilung mit einem niedrigen Homogenitätswert korrespondiert. Alternativ oder zusätzlich kann der Homogenitätswert anhand einer Co-Occurence-Matrix des betreffenden Bildsegments ermittelt werden. Die Co-Occurence-Matrix beschreibt die Häufigkeit des Auftretens von Wertpaaren, insbesondere von Grauwertpaaren entlang eines Verschiebungsvektors und erlaubt die Beurteilung der Verbundwahrscheinlichkeit der Wertepaare. Damit kann die Beschaffenheit des durch das betrachtete Bildsegment abgebildeten Bauteilschichtbereichs mit Hilfe des derart ermittelten Homogenitätswerts besonders präzise charakterisiert werden. Alternativ oder zusätzlich kann der Homogenitätswert anhand wenigstens eines Parameters aus der Gruppe Farbmaximalwert, Farbminimalwert und Mittelwert ermittelt werden. Ein ungewöhnlicher Mittelwert sowie eine vergleichsweise hohe Abweichung zwischen dem Mittelwert und einem Farbmaximal- bzw. -minimalwert korrespondieren generell mit einem niedrigen Homogenitätswert und umgekehrt.

In einer weiteren vorteilhaften Ausgestaltung der Erfindung werden mindestens zwei hergestellte Bauteilschichten evaluiert. Hierdurch ist eine dreidimensionale Evaluierung generativ hergestellter Bauteilbereiche ermöglicht, wodurch Unregelmäßigkeiten im Materialgefüge besonders präzise und zuverlässig ermittelbar sind.

Weitere Vorteile ergeben sich, indem in Abhängigkeit der Evaluation wenigstens ein Prozessparameter des generativen Pulverschichtverfahrens für eine folgende Bauteilschicht variiert wird. Mit anderen Worten ist es vorgesehen, dass die Evaluierung als sequentielle Online-Kontrolle zwischen der Herstellung aufeinander folgender Bauteilschichten durchgeführt wird. Hierdurch können beim Erkennen von Prozessstörungen oder Gefügefehlern relevante Prozessparameter variiert werden, um Fehlerstellen im Bauteil zu beheben oder zumindest zu minimieren. Als Prozessparameter können in Abhängigkeit der Evaluierung beispielsweise die Laserleistung, die Gleichmäßigkeit des Pulverauftrags, die Schichtstärke, der Verfahrweg einer zum Lasersintern und/oder Laserschmelzen verwendeten Bauplattform, ein Streifenüberlapp der Laserbelichtung oder weitere Belichtungsparameter angepasst werden.

In einer weiteren vorteilhaften Ausgestaltung der Erfindung wird auf eine unzulässige Pulverhäufung und/oder auf einen unzulässigen Schmelzbadauswurf geschlossen, wenn wenigstens zwei Homogenitätswerte eine einen vorbestimmten Schwellenwert verletzende Dissimilarität zueinander aufweisen. Mit anderen Worten wird auf das Vorliegen mindestens eines Bauteilfehlers geschlossen, wenn sich wenigstens zwei Homogenitätswerte stärker unterscheiden, als dies ausgehend von der Soll-Beschaffenheit der Bauteilschicht zu erwarten gewesen wäre. Insbesondere bei Homogenitätswerten, die zu räumlich benachbarten Bildsegmenten gehören, signalisieren unerwartete Sprünge das Vorliegen eines fehlerhaften Bauteilschichtbereichs. Ein Dissimilaritätsindex kann dabei als Maßzahl zur Beschreibung der (ungleichen) räumlichen Verteilung der Homogenitätswerte herangezogen werden. Der Dissimilaritätsindex vergleicht die räumliche Verteilung zweier Homogenitätswerte, indem die jeweiligen prozentualen Anteilswerte des Bildsegments an der Abbildung für beide Gruppen bestimmt und die Differenz der Prozentwerte über alle Bildsegmente summiert und mit 0.5 multipliziert werden. Der Dissimilaritätsindex variiert zwischen 0 und 100 und zeigt an, wie viel Prozent der Homogenitätswerte für eine räumlich gleiche Verteilung umverteilt werden müssten.

In einer weiteren vorteilhaften Ausgestaltung der Erfindung ist vorgesehen, dass die wenigstens eine Bauteilschicht als zulässig klassifiziert wird, wenn die Homogenitätswerte einem vorbestimmten Variationskriterium genügen oder dass die wenigstens eine Bauteilschicht als unzulässig klassifiziert wird, wenn die Homogenitätswerte einem vorbestimmten Variationskriterium nicht genügen. Anders ausgedrückt dürfen die Homogenitätswerte nur eine vordefinierte Standardabweichung aufweisen, damit die Bauteilschicht als zulässig klassifiziert werden kann. Dies erlaubt ebenfalls eine einfache Evaluierung und Qualitätsbeurteilung der Bauteilschicht.

Ein zweiter Aspekt der Erfindung betrifft eine Vorrichtung zur Durchführung eines Verfahrens gemäß dem ersten Erfindungsaspekt. Die Vorrichtung umfasst dabei zumindest eine Sensoreinrichtung, welche ausgebildet ist, eine Abbildung wenigstens einer mittels eines generativen Pulverschichtverfahrens hergestellten Bauteilschicht zu ermitteln, und eine Recheneinrichtung, welche ausgebildet ist die Abbildung in eine Mehrzahl von Bildsegmenten zu unterteilten, einen Homogenitätswert für jedes Bildsegment zu ermitteln und die Bauteilschicht anhand der ermittelten Homogenitätswerte zu evaluieren. Die erfindungsgemäße Vorrichtung ermöglicht damit eine verbesserte Evaluierung von generativ hergestellten Bauteilschichten, da auch vergleichsweise kleine Fehlerstellen anhand von Unterschieden und Abweichungen einzelner Homogenitätswerte detektiert und bei der Evaluierung berücksichtigt werden können. Dies ermöglicht eine bessere Qualitätsbeurteilung der einzelnen Bauteilschichten, wodurch auch eine bessere Beurteilung der Gesamtqualität des fertigen Bauteils ermöglicht ist. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung ist vorgesehen, dass die Sensoreinrichtung wenigstens einen hochauflösenden Detektor und/oder wenigstens einen IR-sensitiven Detektor, insbesondere eine CMOS- und/oder sCMOS- und/oder CCD-Kamera zum Erfassen von IR-Strahlung umfasst. Detektoren bzw. Kameras der genannten Bauarten sind in der Lage, die meisten erhältlichen CCD-Bildsensoren zu ersetzen. Im Vergleich zu den bisherigen Generationen von CCD-basierten Sensoren bzw. Kameras bieten Kameras auf Basis von CMOS und sCMOS-Sensoren verschiedene Vorteile wie beispielsweise ein sehr niedriges Ausleserauschen, eine hohe Bildrate, einen großen Dynamikbereich, eine hohe Quanteneffizienz, eine hohe Auflösung sowie eine große Sensorfläche. Dies ermöglicht eine besonders präzise Erfassung einer Abbildung der Bauteilschicht sowie eine entsprechend präzise Ermittlung von Homogenitätswerten der in einzelne Bildsegmente unterteilten Abbildung, wodurch eine besonders zuverlässige Evaluierung der hergestellten Bauteilschicht erreicht wird.

Weitere Vorteile ergeben sich, indem die Vorrichtung eine generative Lasersinter- und/oder Laserschmelzeinrichtung umfasst, mittels welcher die wenigstens eine Bauteilschicht herstellbar ist. Hierdurch kann eine sequenzielle Online-Kontrolle der einzelnen hergestellten Bauteilschichten durchgeführt werden. Weiterhin besteht die Möglichkeit, die generative Lasersinter- und/oder Laserschmelzeinrichtung in Abhängigkeit der Evaluierung einer Bauteilschicht anzusteuern, so dass eine nachfolgende Bauteilschicht derart herstellbar ist, dass etwaige Gefügestörungen und sonstige Bauteilfehler repariert oder kompensiert werden.

Weitere Merkmale der Erfindung ergeben sich aus den Ansprüchen, dem Ausführungsbeispiel sowie anhand der Zeichnung. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigen:
- Fig. 1: eine Abbildung einer mittels eines generativen Laserschmelzverfahrens hergestellten Bauteilschicht; und
- Fig. 2: errechnete Homogenitätswerte für die in Bildsegmente unterteilte Abbildung.

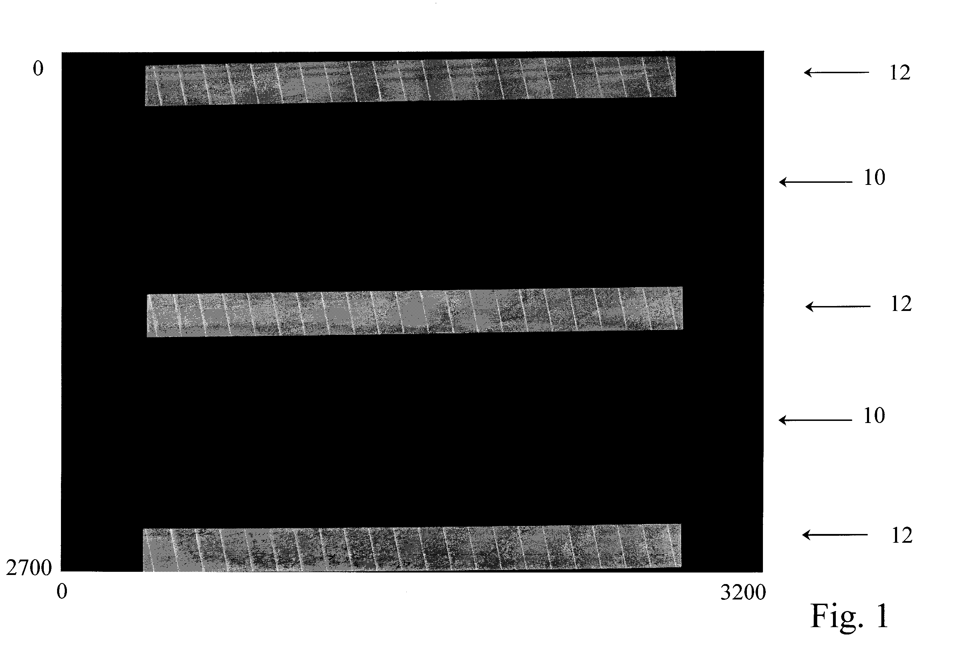

Fig. 1 zeigt eine Abbildung einer mittels eines generativen Laserschmelzverfahrens hergestellten Bauteilschicht. Die Abbildung wurde durch Optische Tomographie als Graustufenbild mit einer Farbtiefe von 16-Bit aufgenommen (OT-Bild) und kann damit Grauwerte zwischen 0 und 65535 enthalten. Die Auflösung des Graustufenbilds beträgt 3200x2700 Pixel. Wie man in Fig. 1 erkennt, weist die Bauteilschicht einen durch niedrige Grauwerte gekennzeichneten Bereich 10 hoher Homogenität auf. Am oberen Rand, in der Mitte und am unteren Rand der Bauteilschicht befinden sich drei linienförmige Bereiche 12, die durch Laserbelichtung eines Werkstoffpulvers während des generativen Laserschmelzverfahrens erzeugt wurden. Die linienförmigen Bereiche 12 erscheinen relativ gleichförmig, weisen aber tatsächlich eine vergleichsweise ungleichförmige Beschaffenheit auf, da durch unzulässige Pulverhäufung, Schmelzbadauswürfe oder sonstige Prozessstörungen unterschiedliche lokale Inhomogenitäten verursacht wurden.

Um diese Inhomogenitäten und damit die Qualität der Bauteilschicht zuverlässig zu evaluieren, wird das aufgenommene Graustufenbild mittels einer Recheneinrichtung in insgesamt 3456 Bildsegmente gleicher Größe unterteilt, wonach für jedes Bildsegment mittels der Recheneinrichtung ein Homogenitätswert ermittelt wird. Dabei kann vorgesehen sein, dass nur Bildsegmente berücksichtigt werden, die einen Teilbereich der Bauteilschicht abbilden. Ebenso können Randeffekte an Kanten der Bauteilschicht bei der anschließenden Ermittlung von Homogenitätswerten für die einzelnen Bildsegmente berücksichtigt werden. Anhand der ermittelten Homogenitätswerte wird dann mittels der Recheneinrichtung die Evaluierung der hergestellten Bauteilschicht durchgeführt.

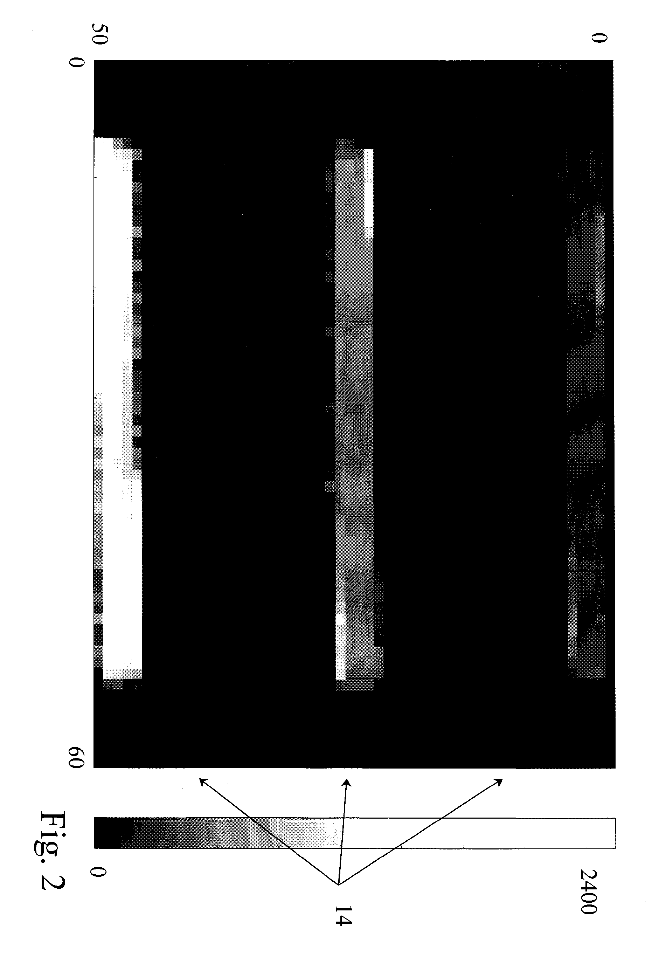

Fig. 2 zeigt hierzu die errechneten Homogenitätswerte für die einzelnen Bildsegmente der in Fig. 1 gezeigten Abbildung. Die Homogenitätswerte wurden dabei mittels eines Grauwert Co-Occurence Algorithmus errechnet. Jedes Pixel charakterisiert damit die Homogenität eines 40x40 Pixel großen Bildsegments des ursprünglichen Graustufenbilds, so dass das in Fig. 2 gezeigte Bild eine Auflösung von 60x50 Pixeln besitzt. Gemäß der in Fig. 2 ebenfalls dargestellten Homogenitätsskala sind die einzelnen Homogenitätswerte durch Graustufen kodiert, die Werte zwischen 0 und 2400 annehmen können, wobei 0 vollständiger Homogenität und 2400 starker Inhomogenität entspricht. Alternativ können die Homogenitätswerte aber natürlich auch farbkodiert dargestellt oder anderweitig repräsentiert werden. Es ist jedoch zu betonen, dass die einzelnen Bildsegmente grundsätzlich keine quadratische Auflösung besitzen müssen. Weiterhin richtet sich die Wahl der Auflösung der Bildsegmente nach der Auflösung der Abbildung und der Geometrie der Bauteilschicht. Dementsprechend kann jedes Bildsegment beispielsweise eine Größe von 10x10 Pixel, 20x20 Pixel, 30x30 Pixel, 50x40 Pixel, 50x20 Pixel etc. aufweisen. Ebenso kann vorgesehen sein, dass jedes Bildsegment eine Größe von etwa 1 mm² der Bauteilschicht abbildet.

Für jedes Bildsegment wird mit Hilfe der Recheneinrichtung ein Homogenitätswert ermittelt und zur Evaluierung der Bauteilschicht herangezogen. Der Homogenitätswert jedes Bildsegments wird wie bereits erwähnt anhand der Co-Occurence-Matrix des Bildsegments ermittelt. Alternativ kann der Homogenitätswert beispielsweise anhand eines Histogramms und der Auswertung der Streuung der Grauwerte (Breite des Histogramms) ermittelt werden. Man erkennt in Fig. 2 drei Bereiche 14 mit höheren Inhomogenitätswerten, die mit den in Fig. 1 gezeigten Bereichen 12 korrespondieren. Weiterhin wird aus Fig. 2 ersichtlich, dass sich die linienförmigen Bereiche 12, die im Graustufenbild in Fig. 1 relativ ähnlich erscheinen, tatsächlich vergleichsweise stark im Hinblick auf ihre Homogenität unterscheiden. Durch Vergleich mit erwarteten und/oder aneinander angrenzenden Homogenitätswerten kann die Qualität der Bauteilschicht beurteilt werden. Beispielsweise kann die Qualität als "in Ordnung" eingestuft werden, wenn kein Homogenitätswert ein vorbestimmtes Variationskriterium verletzt. Umgekehrt kann die Qualität als "nicht in Ordnung" eingestuft werden, wenn einer oder mehrere Homogenitätswerte das vorbestimmte Variationskriterium verletzen.

Es kann weiterhin vorgesehen sein, dass das vorstehend beschriebene Verfahren für mehrere oder für alle Bauteilschichten durchgeführt wird. In diesem Fall ist neben einer zweidimensionalen Auswertung auch eine dreidimensionale Auswertung möglich, indem die Homogenitätswerte über mehrere Bauteilschichten hinweg ermittelt und evaluiert werden. Beispielsweise können bis zu 25 Graustufenbilder oder mehr in der beschriebenen Weise erfasst und als Bildstapel evaluiert werden, wodurch auch schräg durch den betrachteten Bauteilbereich verlaufende Gefügestörungen besonders zuverlässig erkannt werden können. Ebenso kann vorgesehen sein, dass ein Bildstapel aus mehreren Graustufenbilden gemittelt und das resultierende Mittelwertbild der vorstehend beschriebenen Homogenitätsevaluation unterworfen wird.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

### Bezugszeichenliste:

- 10: Bereich
- 12: Bereich
- 14: Bereich

## Patentansprüche

1. Verfahren zum Evaluieren wenigstens einer mittels eines generativen Pulverschichtverfahrens hergestellten Bauteilschicht, umfassend die Schritte
- Erfassen einer Abbildung der wenigstens einen Bauteilschicht mittels einer Sensoreinrichtung;
- Unterteilen der Abbildung in eine Mehrzahl von Bildsegmenten mittels einer Recheneinrichtung;
- Ermitteln eines Homogenitätswerts für jedes Bildsegment mittels der Recheneinrichtung; und
- Evaluieren der Bauteilschicht anhand der ermittelten Homogenitätswerte mittels der Recheneinrichtung.

2. Verfahren nach Anspruch 1,
**dadurch gekennzeichnet, dass**
die Abbildung mittels der Sensoreinrichtung als Graustufenbild erfasst und/oder nach dem Erfassen mittels der Recheneinrichtung vorverarbeitet, insbesondere in ein Graustufenbild umgewandelt wird.

3. Verfahren nach Anspruch 1 oder 2,
**dadurch gekennzeichnet, dass**
die Abbildung in gleich große und/oder quadratische Bildsegmente unterteilt wird.

4. Verfahren nach einem der Ansprüche 1 bis 3,
**dadurch gekennzeichnet, dass**
die Abbildung nur in Abbildungsbereichen in Bildsegmente unterteilt wird, die zumindest eine Teilabbildung der Bauteilschicht enthalten, und/oder dass die Abbildung derart in Bildsegmente unterteilt wird, dass jedes Bildsegment zumindest eine Teilabbildung der Bauteilschicht enthält.

5. Verfahren nach einem der Ansprüche 1 bis 4,
**dadurch gekennzeichnet, dass**
beim Ermitteln der Homogenitätswerte Randbereiche der Bauteilschicht berücksichtigt werden.

6. Verfahren nach einem der Ansprüche 1 bis 5,
**dadurch gekennzeichnet, dass**
wenigstens ein Homogenitätswert anhand einer Häufigkeitsverteilung eines Bildsegments, insbesondere anhand eines Histogramms, und/oder anhand einer Co-Occurence-Matrix eines Bildsegments und/oder anhand wenigstens eines Parameters aus der Gruppe Farbmaximalwert, Farbminimalwert und Mittelwert ermittelt wird.

7. Verfahren nach einem der Ansprüche 1 bis 6,
**dadurch gekennzeichnet, dass**
mindestens zwei hergestellte Bauteilschichten evaluiert werden.

8. Verfahren nach einem der Ansprüche 1 bis 7,
**dadurch gekennzeichnet, dass**
in Abhängigkeit der Evaluation wenigstens ein Prozessparameter des generativen Pulverschichtverfahrens für eine folgende Bauteilschicht variiert wird.

9. Verfahren nach einem der Ansprüche 1 bis 8,
**dadurch gekennzeichnet, dass**
auf eine unzulässige Pulverhäufung und/oder auf einen unzulässigen Schmelzbadauswurf geschlossen wird, wenn wenigstens zwei Homogenitätswerte eine einen vorbestimmten Schwellenwert verletzende Dissimilarität zueinander aufweisen.

10. Verfahren nach einem der Ansprüche 1 bis 9,
**dadurch gekennzeichnet, dass**
die wenigstens eine Bauteilschicht als zulässig klassifiziert wird, wenn die Homogenitätswerte einem vorbestimmten Variationskriterium genügen oder dass die wenigstens eine Bauteilschicht als unzulässig klassifiziert wird, wenn die Homogenitätswerte einem vorbestimmten Variationskriterium nicht genügen.

11. Vorrichtung zur Durchführung eines Verfahrens nach einem der Ansprüche 1 bis 10, umfassend:
- eine Sensoreinrichtung, welche ausgebildet ist, eine Abbildung wenigstens einer mittels eines generativen Pulverschichtverfahrens hergestellten Bauteilschicht zu ermitteln; und
- eine Recheneinrichtung, welche ausgebildet ist
- die Abbildung in eine Mehrzahl von Bildsegmenten zu unterteilten;
- einen Homogenitätswert für jedes Bildsegment zu ermitteln; und
- die Bauteilschicht anhand der ermittelten Homogenitätswerte zu evaluieren.

12. Vorrichtung nach Anspruch 11,
**dadurch gekennzeichnet, dass**
die Sensoreinrichtung wenigstens einen hochauflösenden Detektor und/oder wenigstens einen IR-sensitiven Detektor, insbesondere eine CMOS- und/oder sCMOS- und/oder CCD-Kamera zum Erfassen von IR-Strahlung umfasst.

13. Vorrichtung nach Anspruch 11 oder 12,
**dadurch gekennzeichnet, dass**
diese eine generative Lasersinter- und/oder Laserschmelzeinrichtung umfasst, mittels welcher die wenigstens eine Bauteilschicht herstellbar ist.
